Europäisches Patentamt

European Patent Office

Office européen des brevets

(19)

(11) **EP 0 821 366 A1**

(12) **EUROPÄISCHE PATENTANMELDUNG**

(43) Veröffentlichungstag:
28.01.1998 Patentblatt 1998/05

(51) Int. Cl.⁶: **G21C 17/032**

(21) Anmeldenummer: 97111771.8

(22) Anmeldetag: 10.07.1997

(84) Benannte Vertragsstaaten:
AT BE CH DE DK ES FI FR GB GR IE IT LI LU MC NL PT SE

(30) Priorität: 23.07.1996 DE 19629752

(71) Anmelder:
SIEMENS AKTIENGESELLSCHAFT
80333 München (DE)

(72) Erfinder: Meseth, Johann, Dr.
64807 Dieburg (DE)

(54) **Verfahren zum Bestimmen des Durchsatzes einer Kühlflüssigkeit in einem Reaktordruckbehälter eines Siedewasserreaktors**

(57) Die Erfindung betrifft ein Verfahren zum Bestimmen des Durchsatzes einer Kühlflüssigkeit (c) in einem Reaktordruckbehälter (2) eines Siedewasserreaktors. Im Reaktordruckbehälter (2) wird zumindest ein Druckunterschied ($\Delta p$) in der Kühlflüssigkeit (c) gemessen, der zwischen wenigstens einer ersten und einer zweiten Meßstelle aufgrund unterschiedlicher Strömungsgeschwindigkeit der Kühlflüssigkeit (c) besteht. Die Änderung der Strömungsgeschwindigkeit wird durch eine Änderung der Größe der durchströmten Querschnittsfläche hervorgerufen. Eine solche Druckmessung kann deshalb als eine Wirkdruckmessung aufgefaßt werden, wodurch der Durchsatz gemessen werden kann.

EP 0 821 366 A1

**Beschreibung**

Die Erfindung betrifft ein Kernkraftwerk zur Energieerzeugung und bezieht sich auf ein Verfahren zur Bestimmung des Durchsatzes einer Kühlflüssigkeit in dem Reaktordruckbehälter eines Siedewasserreaktors.

Im Bereich der Energieversorgung werden Kernkraftwerke mit Siedewasserreaktoren eingesetzt. Bei einem Siedewasserreaktor dient Wasser zugleich als Kühlmittel und als Moderator. Die bei den Kernprozessen im Reaktorkern freigewordene Wärme erhitzt das Wasser, das dadurch in die Dampfphase übertritt. Zur Erzeugung von elektrischer Energie wird der heiße und unter Druck stehende Wasserdampf aus dem Reaktordruckbehälter heraus und durch Turbinen geführt. Der gekühlte Wasserdampf wird anschließend wieder als Speisewasser in den Reaktordruckbehälter zur Kühlung und als Moderatormittel eingebracht.

Für die Moderatorwirkung des Wassers ist der Durchsatz des Wassers, auch Kerndurchsatz genannt, durch den Reaktorkern entscheidend. Bei einem geringen Kerndurchsatz bilden sich im Vergleich mit einem hohen Kerndurchsatz im Wasser mehr Dampfblasen. Ein hoher Dampfblasengehalt des Wassers verschlechtert seine Moderatorwirkung und verringert somit die Reaktorleistung. Der Kerndurchsatz der Kühlflüssigkeit wird im Reaktordruckbehälter mittels Umwälzpumpen reguliert, die im Inneren des Reaktordruckbehälters angeordnet sind. Die Kraftwerksleistung wird in der Regel im oberen Leistungsbereich über den Kerndurchsatz gesteuert. Zur Leistungssteuerung ist daher eine Bestimmung des Kerndurchsatzes nötig.

Aufgabe der Erfindung ist es daher, ein Verfahren anzugeben, bei dem der Kerndurchsatz möglichst genau und auf eine einfache Weise bestimmt wird.

Diese Aufgabe wird erfindungsgemäß durch ein Verfahren mit den Merkmalen des Patentanspruches 1 gelöst. Bei diesem Verfahren zum Bestimmen des Durchsatzes einer Kühlflüssigkeit in einem Reaktordruckbehälter eines Siedewasserreaktors wird zumindest ein Druckunterschied der Kühlflüssigkeit gemessen, der zwischen wenigstens einer ersten und einer zweiten Meßstelle im Reaktordruckbehälter besteht. An den Meßstellen weist die Kühlflüssigkeit unterschiedliche Strömungsgeschwindigkeiten auf. Die Änderung der Strömungsgeschwindigkeit wird von einer Änderung der Größe der durchströmten Querschnittsfläche hervorgerufen, so daß diese Druckmessung deshalb als eine Wirkdruckmessung zur Messung des Kerndurchsatzes aufgefaßt werden kann.

In einer vorteilhaften Lösung wird der Druck der Kühlflüssigkeit oberhalb des Kerndeckels des Reaktorkernes und der Druck zwischen der Innenwand des Reaktordruckbehälters und der Außenwand des Kernmantels des Reaktorkernes zur Ermittlung des Druckunterschiedes herangezogen, da hier die Strömungsverhältnisse besonders günstig sind.

In einer weiteren vorteilhaften Ausführung wird einer der beiden Drücke oder der Druckunterschied mit Hilfe wenigstens einer an den Reaktordruckbehälter angeschlossenen Leitung gemessen. Die Leitung verläuft dabei vorzugsweise außerhalb des Reaktordruckbehälters und ist von der Kühlflüssigkeit durchströmbar. Diese Lösung dient der vereinfachten Handhabung und Überwachung der Druckmessung außerhalb des Reaktordruckbehälters.

Vorteilhafterweise sind zwei Leitungen mit je einem Druckmeßgerät vorgesehen, die mit den beiden Meßstellen strömungstechnisch in Verbindung stehen. Die Druckmeßgeräte erfassen den Druck in der jeweiligen Leitung, der den Druck an der zugehörigen Meßstelle wiedergibt.

Vorzugsweise ist eine Meßleitung vorgesehen, die von der Kühlflüssigkeit durchströmt wird und die erste mit der zweiten Meßstelle verbindet. Insbesondere ist es vorteilhaft, in der Meßleitung ein Differenzdruckmeßgerät zur Bestimmung des Druckunterschiedes in der Kühlflüssigkeit vorzusehen.

Weiterhin ist es von Vorteil, mindestens eine an sich bestehende und zur Messung des Füllstandes der Kühlflüssigkeit dienende Leitung zur Druckmessung zu verwenden, um den Installationsbedarf möglichst gering zu halten.

Ein Ausführungsbeispiel der Erfindung wird anhand der Zeichnung näher erläutert. Sie zeigt in einer schematischen Darstellung einen Reaktordruckbehälter eines Siedewasserreaktors.

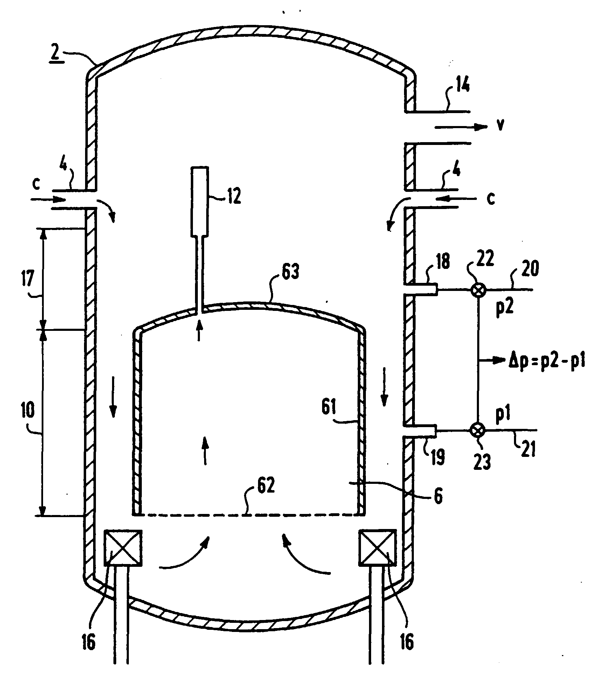

Bei dem in der einzigen Figur der Zeichnung gezeigten Reaktordruckbehälter 2 tritt durch Speisewasserstutzen 4 ein Speisewasser oder Kühlmittel c in den Innenraum des Reaktordruckbehälters 2 oberhalb eines Reaktorkernes 6 ein. Das Kühlmittel c fließt innerhalb des Reaktordruckbehälters 2 von einem Mittelbereich 17 durch einen Engbereich 10 in einen unteren Bereich des Reaktordruckbehälters 2, der im wesentlichen den Bereich des Reaktordruckbehälters 2 unterhalb des Reaktorkerns 6 umfaßt. Der Engbereich 10 wird begrenzt von der Innenseite des Reaktordruckbehälters 2 und der Außenseite des Kernmantels 61 des Reaktorkernes 6. Das Kühlmittel c tritt von unten durch eine Kerngitterplatte 62 in den Reaktorkern 6 ein. In dem Reaktorkern 6 wird das Kühlmittel c erhitzt und geht zumindest teilweise in die Dampfphase über. Das Kühlmittel c verläßt den Reaktorkern 6 als Sattdampf durch einen Kerndeckel 63 und wird über Leitungen, die den Kerndeckel 63 mit Dampfabscheidern 12 (von denen in FIG 1 nur einer schematisch angedeutet ist) verbinden, in dieselben gebracht. Der erzeugte Dampf v verläßt durch einen Dampfaustrittsstutzen 14 den Reaktordruckbehälter 2.

Zur Regelung des Kerndurchsatzes, also des Durchsatzes des Kühlmittels c durch den Reaktorkern 6, sind im unteren Bereich des Reaktordruckbehälters 2 Kühlmittel-Umwälzpumpen 16 angebracht. Über den Kerndurchsatz wird die Moderatoreigenschaft des Kühlmittels c reguliert, und somit indirekt die Leistung des gesamten Reaktors.

In dem Reaktordruckbehälter 2 ist ferner im Mittelbereich 17 ein Meßstutzen 18 und im Engbereich 10 ein weiterer Meßstutzen 19 angebracht, die beispielsweise zur Messung des Füllstandes des Kühlmittels c im Reaktordruckbehälter 2 benutzt werden. Im Inneren des Reaktordruckbehälters 2 liegt im Bereich des Meßstutzens 19 eine erste Meßstelle zur Erfassung des im Engbereich 10 herrschenden Druckes p1 und im Bereich des Meßstutzens 18 liegt eine zweite Meßstelle zur Erfassung des im Mittelbereich 17 herrschenden Druckes p2. Von den Meßstutzen 18,19 führt je eine Leitung 20,21 ab, die mit dem Mittelbereich 17 bzw. dem Engbereich 10, also mit den beiden Meßstellen, strömungstechnisch in Verbindung stehen. Die Meßstutzen 18,19 werden zusammen mit den Leitungen 20,21 zur Erfassung des Druckes p2 des Kühlmittels c im Mittelbereich 17 und des Druckes p1 im Engbereich 10 verwendet.

Diese Meßanordnung, die den Druck des Kühlmittels c an den beiden Meßstellen im Engbereich 10 und im Mittelbereich 17 ermittelt, basiert auf dem Prinzip einer Wirkdruck-Massenstrommessung: Durch die Verengung des Fließquerschnittes für das Kühlmittel c im Engbereich 10 wird das Kühlmittel c stark beschleunigt. Die Geschwindigkeit des Kühlmittels c im Mittelbereich 17 ist gegenüber der Fließgeschwindigkeit im Engbereich 10 zu vernachlässigen. Über den dadurch entstehenden Staudruck im Engbereich 10 läßt sich der Durchsatz des Kühlmittels c ermitteln. Bei der Bestimmung des Kerndurchsatzes ist zu berücksichtigen, daß sich die Druckdifferenz Δp zwischen dem Druck p2 im Mittelbereich 17 und dem Druck p1 im Engbereich 10 aus dem Staudruck und einem im wesentlichen durch die Schwerkraft hervorgerufenen Druckunterschied zusammensetzt.

Ohne Reibungsanteile, die vernachlässigbar klein sind, ergibt sich für die Druckdifferenz Δp unter Benutzung der Bernoulli- und Kontinuitätsgleichung folgende Gleichung:

$$\Delta p = \Delta p_{geo} - \frac{\rho}{2} w_{eng}^2 = C - K \cdot \dot{m}_{ker\,n}^2$$

In dieser Gleichung ist mit $\Delta p_{geo}$ eine weitestgehend konstante Druckdifferenz bezeichnet, die durch die Schwerkraft hervorgerufen ist, $\rho$ ist die Dichte des Kühlmittels c, $w_{eng}$ ist die Geschwindigkeit des Kühlmittels c im Engbereich 10; C bezeichnet eine Konstante, K einen Proportionalitätsfaktor und $\dot{m}_{ker\,n}$ bezeichnet den Kerndurchsatz.

Die Gleichung besagt, daß die gemessene Druckdifferenz Δp direkt proportional zum Quadrat des Kerndurchsatzes des Kühlmittels c durch den Reaktorkern 6 ist. Somit ist eine Möglichkeit gegeben, den Kerndurchsatz mit ausreichender Genauigkeit und auf einfache Weise zu bestimmen.

Gemäß der FIG 1 ist in der das Kühlmittel c führenden Leitung 21 ein erstes Druckmeßgerät 23 angeordnet, um den Druck p1 des Kühlmittels c im Engbereich 10 zu bestimmen. Ein zweites Druckmeßgerät 22 ist in der Leitung 20 zum Bestimmen des Druckes p2 im Mittelbereich 17 angeordnet. Aus den von den beiden Druckmeßgeräte 22 und 23 bereitgestellten Meßsignalen kann der Differenzdruck Δp zwischen dem Druck p2 und dem Druck p1 ermittelt werden.

Anstatt der beiden in der FIG 1 dargestellten Druckmeßgeräte 22,23 ist auch die Anordnung eines einzigen Differenzdruckmeßgerätes möglich, das beispielsweise in einer nicht näher dargestellten Meßleitung angeordnet ist, die mit dem Engbereich 10 und dem Mittelbereich 17 strömungstechnisch in Verbindung steht. Eine solche Meßleitung ist beispielsweise eine strömungstechnische Verbindung zwischen der Leitung 20 und der Leitung 21 in der Art einer Bypass-Leitung.

Ferner besteht die Möglichkeit, den Druck des Kühlmittels c nicht erst in den Leitungen 20 oder 21 zu erfassen, sondern ihn bereits direkt innerhalb des Reaktordruckbehälters 2 vorzugsweise im Bereich der Meßstutzen 18 bzw. 19 über einen geeigneten Druckwandler aufzunehmen, und das jeweilige Meßsignal beispielsweise über elektrische Leitungen, die in den Leitungen 20 bzw. 21 verlaufen, zu einem Auswerteoder Anzeigegerät zu führen.

Bei der oben beschriebenen Methode zur Erfassung des Kerndurchsatzes ist für den Differenzdruck Δp mit Meßwerten von ca. 20 bis 30 mbar zu rechnen, bei Störsignalen, die in der Größenordnung von 1 mbar liegen. Die Störsignale können zusätzlich durch mechanische und/oder elektrische Dämpfung verringert werden.

Die durch die Schwerkraft bedingte Druckdifferenz kann errechnet oder gemessen werden. Durch eine Bestimmung des Proportionalitätsfaktors K, der entweder im Modellversuch zu ermitteln oder theoretisch abzuschätzen ist, besteht die Möglichkeit, das Meßsignal Δp auf den prozentualen Kerndurchsatz zu kalibrieren. Bei fehlender Kalibrierung dient dieses Meßsystem zumindest zur genauen Bestimmung von Änderungen des Kerndurchsatzes. Es besteht dann immerhin die Möglichkeit, bei unvorhergesehenen Ereignissen während des Betriebes relative Änderungen des Kerndurchsatzes exakt zu beurteilen.

Sind in dem Reaktordruckbehälter 2 eines Siedewasserreaktors keine Meßstutzen 18,19 für eine Füllstandsmessung vorgesehen, so können auch andere Stutzen verwendet werden, die beispielsweise nachträglich am Reaktordruckbehälter 2 an geeigneten Stellen angebracht worden sind, so daß eine Erfassung der Druckdifferenz des Kühlmittels c, die auf dem Prinzip einer Wirkdruck-Massenstrommessung basiert, gewährleistet ist.

**Patentansprüche**

1. Verfahren zum Bestimmen des Durchsatzes einer Kühlflüssigkeit (c) in einem Reaktordruckbehälter (2) eines Siedewasserreaktors, bei dem im Reaktordruckbehälter (2) zumindest ein Druckunterschied Δp in der Kühlflüssigkeit gemessen wird, der zwischen wenigstens einer ersten und einer zweiten Meßstelle aufgrund unterschiedlicher Strömungsgeschwindigkeit der Kühlflüssigkeit (c) besteht.

2. Verfahren nach Anspruch 1, bei dem der Druck (p2) der Kühlflüssigkeit (c) oberhalb des Kerndeckels (63) des Reaktorkernes (6) und der Druck (p1) zwischen der Innenwand des Reaktordruckbehälters (2) und der Außenwand des Kernmantels (61) des Reaktorkernes (6) zur Ermittlung des Druckunterschiedes Δp herangezogen werden.

3. Verfahren nach Anspruch 1 oder 2, bei dem einer der Drücke (p1,p2) oder der Druckunterschied (Δp) mit Hilfe wenigstens einer an den Reaktordruckbehälter (2) angeschlossenen Leitung (20,21) gemessen wird.

4. Verfahren nach einem der Ansprüche 1 bis 3, bei dem zwei Leitungen (20,21) mit je einem Druckmeßgerat (22,23) vorgesehen sind.

5. Verfahren nach einem der Ansprüche 1 bis 4, bei dem eine Meßleitung vorgesehen ist, die von der Kühlflüssigkeit (c) durchströmt wird und die erste mit der zweiten Meßstelle verbindet.

6. Verfahren nach einem der Ansprüche 1 bis 5, bei dem in der Meßleitung ein Differenzdruckmeßgerät vorgesehen ist.

7. Verfahren nach einem der Ansprüche 2 bis 6, bei dem mindestens eine an sich bestehende und zur Messung des Füllstandes der Kühlflüssigkeit (c) dienende Leitung (20,21) auch zur Druckmessung verwendet wird.

EP 0 821 366 A1

**Europäisches Patentamt**

**EUROPÄISCHER RECHERCHENBERICHT**

Nummer der Anmeldung

EP 97 11 1771

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | US 4 696 792 A (HOBSON)<br>* Spalte 5, Zeile 12-24; Abbildungen 1A,1B * | 1-3,5,6 | G21C17/032 |
| X | US 4 842 806 A (OHTOMI)<br>* das ganze Dokument * | 1,3,4,6 | |
| X | US 4 315 800 A (YOSHIMOTO ET AL.)<br>* Spalte 4, Zeile 40-57; Abbildung 2 * | 1,3,5 | |
| X | DATABASE WPI<br>Week 8544<br>Derwent Publications Ltd., London, GB;<br>AN 85-272445<br>XP002044249<br>& JP 60 183 590 A (TOSHIBA KK) ,<br>19.September 1985<br>* Zusammenfassung * | 1-3,6 | |
| X | PATENT ABSTRACTS OF JAPAN<br>vol. 013, no. 157<br>& JP 63 315984 A (BABCOCK HITACHI KK),<br>23.Dezember 1988,<br>* Zusammenfassung * | 1,3,4,6 | **RECHERCHIERTE SACHGEBIETE (Int.Cl.6)**<br><br>G21C |
| X | PATENT ABSTRACTS OF JAPAN<br>vol. 095, no. 003<br>& JP 06 331783 A (HITACHI LTD.),<br>2.Dezember 1994,<br>* Zusammenfassung *<br><br>                     -/-- | 1,3,4,6 | |

Der vorliegende Recherchenbericht wurde für alle Patentansprüche erstellt

| Recherchenort | Abschlußdatum der Recherche | Prüfer |
|---|---|---|
| MÜNCHEN | 22.Oktober 1997 | Frisch, K |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

6

EP 0 821 366 A1

<table>
<tr><td colspan="2">Europäisches Patentamt</td><td>EUROPÄISCHER RECHERCHENBERICHT</td><td>Nummer der Anmeldung<br>EP 97 11 1771</td></tr>
</table>

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | DATABASE WPI<br>Week 8510<br>Derwent Publications Ltd., London, GB;<br>AN 85-058201<br>XP002044257<br>& JP 60 013 287 A (NIPPON GENSHIRYOKU JIGYO KK ET AL.) , 23.Januar 1985<br>* Zusammenfassung *<br>----- | 1-3,6,7 | |
| | | | RECHERCHIERTE SACHGEBIETE (Int.Cl.6) |

Der vorliegende Recherchenbericht wurde für alle Patentansprüche erstellt

| Recherchenort | Abschlußdatum der Recherche | Prüfer |
|---|---|---|
| MÜNCHEN | 22.Oktober 1997 | Frisch, K |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

7